# FASCICULE DE BREVET EUROPEEN

(11) **EP 3 654 613 B1**
(45) Date de publication et mention de la délivrance du brevet: **16.03.2022**
(21) Numéro de dépôt: 19208667.6
(22) Date de dépôt: 12.11.2019
(51) Int. Cl.: H04L 29/06, G06F 3/14, A63F 13/30, H04L 12/851

(54) **PROTOCOLE DE TRANSMISSION D'UN FLUX DE DONNÉES TRANSITANT ENTRE UN ORDINATEUR HÔTE ET UN CLIENT DISTANT**
ÜBERTRAGUNGSPROTOKOLL EINES DATENFLUSSES ZWISCHEN EINEM HOST-RECHNER UND EINEM ENTFERNTEN KLIENTEN
PROTOCOL FOR TRANSMITTING A DATA FLOW IN TRANSIT BETWEEN A HOST COMPUTER AND A REMOTE CLIENT

(30) Priorité: 16.11.2018 FR 1860634
(43) Date de publication de la demande: 20.05.2020
(73) Titulaire: Shadow, 75002 Paris (FR)
(72) Inventeur: DIRSON, Yann, 92000 NANTERRE (FR); GELLY, Grégory, 75013 PARIS (FR)
(74) Mandataire: IP Trust

(56) Documents cités:
- US-A1- 2015 046 599
- US-A1- 2017 026 439

## Description

### DOMAINE DE L'INVENTION

La présente invention concerne un protocole de transmission d'un flux de données transitant entre un ordinateur hôte et un client distant en utilisant la bande passante d'un réseau informatique.

### ARRIERE PLAN TECHNOLOGIQUE DE L'INVENTION

Les documents US2017228851 et FR3047576 décrivent une configuration de système informatique, dans lequel des dispositifs d'interface d'utilisateur (affichage, clavier, ...) sont séparés de la partie traitement de l'application. Les dispositifs d'interface utilisateur (également dénommé collectivement comme le "client") se trouvent à proximité de l'utilisateur alors que les composants de traitement et de stockage formant un ordinateur hôte se trouvent dans un lieu d'hébergement distant. Les dispositifs d'interface utilisateur ont généralement accès, au niveau de l'ordinateur hôte, à une machine virtuelle dédiée par l'intermédiaire d'un réseau (le plus souvent Internet), la machine virtuelle émulant le traitement, le stockage et toutes les autres ressources informatiques requises pour que l'utilisateur puisse exploiter une session informatique, comme si celle-ci s'exécutait localement. L'ordinateur hôte héberge le système d'exploitation et les applications logicielles utilisées par les clients, ce qui limite les ressources de traitement du côté du client.

Il est habituel que l'ordinateur hôte soit constitué d'une pluralité de systèmes informatiques physiques (serveurs), chacun hébergeant une pluralité de machines virtuelles. Chaque machine virtuelle est connectée à un client, et fournit un environnement virtuel dédié pour émuler les fonctions d'un ordinateur personnel physique, y compris le traitement des données graphiques, et fournir les informations d'affichage de session d'utilisateur sur l'écran du client. Les données à afficher, appelées données d'affichage, sont transférées au client, de même que les données de son. Le client possède des ressources informatiques suffisantes pour recevoir le flux de données et afficher et/ou émettre celles-ci. Le client échange également des informations ou des instructions avec la machine virtuelle, telle que celles générés par les dispositifs d'interface (clavier, souris...). Ces informations sont appelées données de commande.

L'ensemble de ces informations, qui comprend les données d'affichage, les données de son et les données de commande, forme un flux de données qui est transmis entre l'ordinateur hôte et le client, par l'intermédiaire du réseau.

Il existe une grande variété de protocoles standards de télécommunication pour transmettre un flux de données entre un ordinateur hôte et un client. A titre d'exemple, on connait ainsi le protocole de datagramme utilisateur, aussi appelé protocole UDP (acronyme de la terminologie anglo-saxonne « User Datagram Protocol »), qui est un protocole non orienté connexion, ce qui permet la transmission de données de manière simple et rapide. Toutefois, l'absence de connexion et de communication préalable entre l'ordinateur hôte et le client, qui permet la rapidité de la transmission, induit en contrepartie l'absence de contrôle d'erreur. Le protocole UDP ne comporte aucune garantie sur l'absence de perte ou de duplication des données transmises. Autrement dit, ce protocole assure une livraison rapide des données mais présente un risque que ces données soient perdues ou arrivent dans le désordre.

A titre d'exemple complémentaire, on connait également le protocole de contrôle de transmissions, appelé protocole TCP (acronyme de la terminologie anglo-saxonne « Transmission Control Protocol). Ce protocole est un protocole de transport en mode connecté qui est fiable, c'est-à-dire sans risque de perte de données. Les mécanismes de fiabilité mise en œuvre par ce protocole comprennent par exemple le séquencement des paquets de données, la transmission d'informations du récepteur à l'émetteur quant à la place encore disponible dans sa mémoire, un mécanisme d'accusé de réception, etc. Ces mécanismes présentent toutefois l'inconvénient de ralentir la communication. Pour le dire autrement, ce protocole assure une transmission fiable, sans perte et dans l'ordre des données, mais induit une latence significative.

Des protocoles de couche de transport alternatifs aux protocoles UDP et TCP ont été prévus pour la transmission d'un flux de données audiovisuelles. Ainsi, le protocole de transmission temps réel, appelé protocole RTP (acronyme de la terminologie anglo-saxonne « Real-time Transport Protocol), est un protocole optimisé pour le transfert de données dynamiques sur un réseau point à point respectant des contraintes de temps réel. Utilisant le protocole UDP, le protocole RTP prévoit en outre des mécanismes de détection de pertes de paquets. Toutefois, il ne permet pas toujours de gérer les ressources dans le réseau, ce qui peut conduire à une congestion du réseau et une augmentation de la latence.

Certaines situations requièrent de pouvoir disposer d'une communication du flux de données entre l'ordinateur hôte et le client distant qui soit à la fois à faible latence et fiable. C'est le cas en particulier des jeux vidéo, dans le cadre desquels l'utilisateur ne peut se permettre de subir ni une latence importante ni une perte de données.

Dans ces situations, les protocoles connus apparaissent insatisfaisants au regard de leurs faiblesses respectives.

La présente invention vise à résoudre ce problème, et propose un protocole particulièrement adapté à la transmission de données d'affichage, de son et de commande entre un ordinateur hôte et un client distant.

On connaît de l'état de la technique les documents US2017026439 et US2015046599 qui divulguent un procédé de transmission de données vidéo, audio et graphiques entre plusieurs unités. Dans ces documents il est prévu qu'une pluralité de protocoles de transmission soient mis en œuvre.

### BREVE DESCRIPTION DE L'INVENTION

En vue de la réalisation de ce but, l'objet de l'invention propose un protocole de transmission telle que celui-ci est défini par la revendication 1.

En traitant de manière spécifique les données d'affichage, de son et de commande, tel que cela est revendiqué le protocole de transmission de flux de données permet de prendre en compte les caractéristiques propres de chaque type de données pour fiabiliser la transmission du flux de données entre l'ordinateur hôte et le client, sans excessivement détériorer la qualité de la transmission, et notamment sa latence.

Selon d'autres caractéristiques avantageuses et non limitatives de l'invention, prises seules ou selon toute combinaison techniquement réalisable :
- le traitement de fiabilisation des données d'affichage comprend les étapes suivantes :
   o la détection par le client distant de perte de données d'affichage ;
   o en cas de détection d'une perte de données d'affichage, la transmission par le client distant à l'ordinateur hôte d'un message d'information d'acquittement négatif signalant la perte de données d'affichage ;
   o en cas de réception du message d'information d'acquittement négatif, la transmission par l'ordinateur hôte au client distant des données d'affichage perdues ;
- le traitement de fiabilisation des données d'affichage comprend les étapes suivantes :
   o la détection par le client distant de perte de données d'affichage ;
   o en cas d'absence de détection d'une perte de données d'affichage, la transmission par le client distant à l'ordinateur hôte d'un message d'information d'acquittement signalant l'absence de perte de données d'affichage ;
   o en cas d'absence de réception du message d'information d'acquittement, la transmission par l'ordinateur hôte au client distant des données d'affichage perdues ;
- l'étape de redondance externe comprend les étapes suivantes :
   o une première transmission d'un premier paquet de données de son ;
   ∘ une seconde transmission du premier paquet de données de son, la seconde transmission intervenant à l'issue d'un premier délai ;
   ∘ une première transmission d'un second paquet de données de son, la première transmission du second paquet de données de son intervenant à l'issue d'un second délai ;
   le premier délai étant inférieur au second délai, le second paquet étant numéroté par l'entier directement supérieur au numéro du premier paquet ;
- le premier délai est compris entre 5 et 20 ms, et le second délai est compris entre 10 et 30 ms ;
- l'étape de redondance interne comprend les étapes suivantes :
   ∘ la préparation d'une première séquence de données de commande en un premier paquet de données de commande ;
   ∘ la transmission du premier paquet de données de commande ;
   ∘ la préparation d'une seconde séquence de données de commande en un second paquet de données de commande, la seconde séquence de données de commande comportant une partie au moins de la première séquence de données de commande ;
   ∘ la transmission du second paquet de données de commande.

### BREVE DESCRIPTION DES DESSINS

D'autres caractéristiques et avantages de l'invention ressortiront de la description détaillée de l'invention qui va suivre en référence aux figures annexées sur lesquels :
- La figure 1 représente une architecture informatique dans laquelle peut être mise en œuvre la présente invention ;
- la figure 2 représente les étapes successives d'un premier mode de réalisation d'un traitement de données d'affichage conforme à l'invention ;
- la figure 3 représente les étapes successives d'un deuxième mode de réalisation d'un traitement de données d'affichage conforme à l'invention ;
- la figure 4a représente les étapes successives d'un mode de réalisation d'un traitement de données de son conforme à l'invention ;
- la figure 4b représente un graphique présentant la chronologie des étapes successives d'un mode de réalisation d'un traitement du flux de données de son conforme à l'invention ;
- la figure 5 représente les étapes successives d'un mode de réalisation d'un traitement du flux de données de commande conforme à l'invention ;
- la figure 6a représente le schéma d'un premier paquet de données de commande conforme à l'invention ;
- la figure 6b représente le schéma d'un second paquet de données de commande conforme à l'invention.

### DESCRIPTION DETAILLEE DE L'INVENTION

Dans la description qui suit, des descriptions détaillées de fonctions et d'éléments connus, qui pourraient inutilement rendre obscur l'essentiel de la présente invention, seront omises.

### Architecture informatique

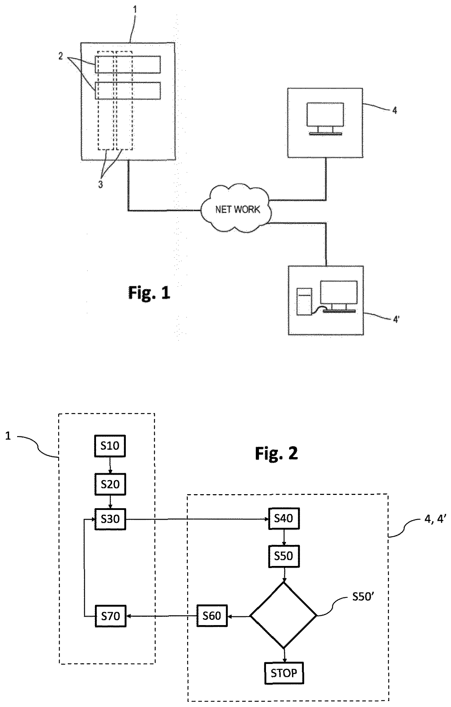

La figure 1 représente une architecture informatique permettant de mettre en œuvre le protocole de transmission de flux de données de la présente description.

Cette architecture est formée ici d'un ordinateur hôte 1 qui présente une pluralité de serveurs 2. Les serveurs 2 sont constitués de composants performants (CPU, mémoire, disque de stockage, cartes graphiques et de réseau, ...) de manière à former une plateforme matérielle particulièrement efficace pour exécuter des applications pouvant nécessiter des capacités de traitement importantes, telles que les jeux vidéo.

Comme cela est bien connu, les serveurs 2 peuvent être configurés pour héberger une ou plusieurs machine(s) virtuelle(s) 3, en même temps que son/leur système d'exploitation et ses/leurs applications. La virtualisation permet qu'une pluralité de machines virtuelles 3 soient hébergées dans chaque serveur 2 pour fournir une pluralité d'environnements virtuels totalement isolés les uns des autres. Chaque environnement virtuel a accès aux ressources matérielles du serveur (CPU, mémoire, moyens de stockage, carte graphique, ...) permettant d'y exécuter une session informatique d'utilisateur. On peut citer, parmi les technologies de virtualisation bien connues, Citrix XenServer, Microsoft Hyper-V, VMware ESXi, Oracle Virtual box, Quick Emulator sous licence ouverte GNU (QEMU), etc.

Chacune des machines virtuelles 3 dans l'ordinateur hôte 1 peut être dédiée à un utilisateur spécifique. Les utilisateurs interagissent avec leurs machines virtuelles 3 dédiées depuis des clients distants 4, 4', chacun étant connecté à l'ordinateur hôte 1 par l'intermédiaire d'un réseau comme Internet. Étant donné que la plus grande partie, si ce n'est l'intégralité, du traitement se fait au niveau de l'ordinateur hôte 1, les clients distants 4, 4' peuvent rester très simples, et peuvent inclure, par exemple, un simple terminal, un connecteur de réseau et des dispositifs d'entrée/sortie de base (clavier, souris...) comme représenté par le client distant 4 sur la figure 1. Le client distant 4 peut être formé d'un dispositif informatique simplifié, tel qu'une tablette, un Smartphone. Selon une autre solution, il peut s'agir d'un ordinateur personnel standard, disposant de sa propre unité centrale, d'une carte graphique, de périphériques, ... comme représenté par le client distant 4'.

Chaque serveur 2 de l'ordinateur hôte 1 héberge, de préférence, moins de dix machines virtuelles 3 pour fournir des ressources informatiques suffisantes, notamment matérielles, à chaque machine virtuelle 3 pour exécuter des applications hautes performances avec un niveau suffisant de service. Chaque machine virtuelle 3 est créée au moment de la connexion du client à l'ordinateur hôte 1 et comprend une unité centrale virtuelle, une mémoire principale virtuelle, une carte graphique virtuelle ou physique ainsi que d'autres ressources. Préférentiellement, une carte graphique physique performante est associée à chaque machine virtuelle 3. Cette carte graphique comprend au moins une unité de traitement graphique pour préparer des données d'affichage de la session, et un encodeur apte à former un flux vidéo, par exemple selon le format H.264, à partir des données d'affichage élaborées par la session informatique.

Chaque machine virtuelle 3 émule un ordinateur personnel virtuel hautes performances qui est associé et commandé par un client distant 4, 4'. Chaque machine virtuelle 3 constitue donc, ou est l'équivalent, d'une session d'utilisateur, et un grand nombre de ces sessions d'utilisateur peuvent être exécutées sur les serveurs 2 de l'ordinateur hôte 1. L'architecture informatique peut comprendre une pluralité d'ordinateurs hôtes 1, reliés entre eux et qui peuvent se trouver dans des centres de données informatiques géographiquement séparés.

Une machine virtuelle et le client associé se communiquent un flux de données composé au moins des données d'affichage et de son, produit par la session d'utilisateur sur l'ordinateur hôte 1, et des données de commande, produits par les dispositifs d'interface du client distant 4, 4'.

Un programme de capture et de diffusion des informations de session s'exécute, en tâche de fond, dans la session d'utilisateur de la machine virtuelle 3. Le programme de capture et de diffusion met en œuvre des opérations visant à collecter les données brutes d'affichage, de son et de commande préparées par la session informatique, d'encoder ces données pour limiter l'utilisation de la bande passante du réseau et de les transmettre au client distant 4, 4', par l'intermédiaire d'un contrôleur réseau. Le programme de capture et de diffusion peut notamment commander le niveau d'encodage (i.e. de compression) des données brutes d'affichage ou de son. Le programme de capture et de diffusion reçoit et décode également les données de commande communiquées par le client distant 4, 4', et les fournit à la session d'utilisateur pour qu'elles soient traitées et exploitées.

Le client distant 4, 4', est muni des ressources matérielles suffisantes pour exécuter un programme d'exploitation permettant de décoder les informations communiquées par l'ordinateur hôte 1, et notamment pour afficher les données d'affichage et reproduire les données de son. Le programme d'exploitation permet également de préparer et transmettre les données de commande générées par les dispositifs d'interface du client distant 4, 4' à l'ordinateur hôte 1.

### Protocole

Il est usuel de décrire les fonctions de communication entre deux systèmes informatiques en faisant référence au modèle conceptuel OSI (acronyme de l'expression anglo-saxonne « Open System Interconnection »). La description à venir vise à définir le protocole de transport, formant la couche 4 de ce modèle, pour parer à certaines défaillances de transmission pouvant apparaître entre l'ordinateur hôte 1 et le client distant 4, 4'. Le traitement mettant en œuvre les fonctionnalités des autres couches du modèle OSI, et notamment celles de la couche 7 d'application, de la couche 6 de présentation et de la couche 5 de session peuvent être assurées par des protocoles habituels, bien connus en soi, ne seront donc pas décrit plus en détail, par souci de concision.

Plus particulièrement, le protocole selon la présente description régit la communication logique entre le programme de capture et de diffusion et le programme d'exploitation s'exécutant respectivement sur l'ordinateur hôte 1 et sur le client distant 4, 4'. Le flux de données transite entre des ports d'entrée et de sortie associés à ces programmes. Le programme de capture et de diffusion et le programme d'exploitation pourront être également désignés dans la suite de cette description comme « programme émetteur » ou « programme récepteur », selon les opérations qu'ils réalisent.

Différents types de défaillances de transmission peuvent se produire lors du transit du flux de données entre l'ordinateur hôte 1 et le client distant 4, 4'. La perte de données désigne la situation dans laquelle un paquet de données en provenance du port de sortie ne parvient pas au port d'entrée avant l'écoulement d'un délai prédéterminé. Le déséquencement des paquets désigne le fait pour un ensemble de paquets transmis depuis un port de sortie du programme émetteur suivant une succession particulière de parvenir au port d'entrée du programme récepteur dans un ordre différent. La duplication involontaire des paquets de données désigne la situation dans laquelle un paquet de données, transmis depuis le port d'entrée jusqu'au port de sortie, est reçu une pluralité de fois au port d'entrée.

Un procédé de transmission (aussi désigné « protocole de transmission ») conforme à la présente description comprend une pluralité de traitements de fiabilisation du flux de données pour parer aux possibles défaillances de transmission.

D'une manière générale, les traitements de fiabilisation mettent en œuvre des mécanismes visant à rendre redondante l'information transmise de manière à rendre plus certain sa bonne réception. Cette redondance d'information, qui peut comprendre une simple numérotation ordonnée des paquets de données transmis ou la duplication de la transmission des paquets de données, conduit à une augmentation de la bande passante consommée lors du transit sur le réseau informatique. Une consommation excessive de cette bande passante induit une congestion du réseau, ce qui est susceptible d'entraîner l'augmentation de la latence, l'augmentation de la gigue, c'est-à-dire de la variation de la latence dans le temps, et une augmentation du taux de perte de paquets. On rappelle que la latence désigne, dans le cadre de la présente description, le temps séparant l'instant auquel les données (d'affichage, de son et/ou de commande) à transmettre sont rendues disponible par l'ordinateur hôte et/ou le client, et l'instant auquel ces données sont exploitées (affichées ou reproduites par le client distant 4, 4' pour ce qui concerne les données d'affichage et de son, traités par l'hôte 1 en ce qui concerne les données de commandes).

Dans l'environnement informatique qui a été décrit, on recherche tout particulièrement à limiter cette latence, afin que l'utilisateur d'un client distant 4, 4' ait l'impression de disposer localement des ressources informatiques mise à disposition par l'ordinateur hôte 1. Il est donc particulièrement important que les traitements de fiabilisation du flux de données soient conçus au plus juste, afin de ne pas conduire à une consommation excessive de bande passante.

La Demanderesse a constaté que les données d'affichage, de son et de commande présentent des caractéristiques propres très différentes les unes des autres. Les données d'affichage se caractérisent par un volume important par rapport aux autres données. Les données d'affichage constituent généralement le principal contributeur au flux de données transitant sur le réseau informatique. Les données de son et de commande présentent un volume de données beaucoup plus réduit que les données d'affichage. C'est en particulier vrai pour des données de commande. Il est en revanche important que ces données de commande puissent être transmises à une fréquence élevée, bien plus importante que celles des autres données, pour ne pas retarder le traitement de ces données par l'ordinateur hôte 1. La fréquence désigne ici le nombre de paquets de données adressé sur le réseau par unité de temps. A titre d'exemple, la fréquence de transmission des données de commande peut atteindre environ 1000 Hz, tandis que la fréquence de transmission des données de son peut être de 25 à 100 Hz.

Pour parer aux défaillances de transmission, sans affecter excessivement la latence, les traitements de fiabilisation mis en œuvre par le protocole de transmission qui s'appliquent respectivement sur les données d'affichage, sur les données de son et sur les données de commande sont tous différents les uns des autres.

Appliquer un traitement différent à chaque type de données permet ainsi de prendre en compte la différence de caractéristiques de chacune de ces données, et de limiter la consommation de la bande passante lors de la transmission fiabilisée du flux de données.

D'une manière générale, le protocole de transmission comprend une étape d'encapsulation des données d'affichage, de son ou de commande, c'est-à-dire le rassemblement de ces données au sein d'unités de données appelées paquets. L'étape d'encapsulation est mise en œuvre par le programme émetteur. L'étape d'encapsulation comprend également l'ajout d'un entête, qui indique le port du programme émetteur, appelé port de sortie, le port du programme destinataire, appelé port d'entrée. L'en-tête indique également la longueur totale du paquet circulant entre l'ordinateur hôte 1 et le client distant 4, 4'. L'en-tête peut également prévoir un contrôle d'erreur sur le contenu du paquet, par exemple au moyen d'un calcul de somme de contrôle.

A titre d'exemple, l'identification du port de sortie et l'identification du port d'entrée peuvent être codées sur 16 bits chacune, soit 2 octets. De la même façon, la longueur totale du paquet et le champ de contrôle d'erreur peuvent être codées sur 16 bits chacun. Toutefois, l'invention ne se limite nullement à ces caractéristiques particulières.

Ces paquets de données sont ensuite eux-mêmes encapsulés dans un paquet de couche de réseau, la couche 3 du modèle OSI, comprenant l'adresse logique source et l'adresse logique de destination, afin de permettre le routage du paquet à travers le réseau. Dans le cadre d'un transit par l'intermédiaire du réseau Internet, les adresses logiques sont les adresses IP de l'ordinateur hôte 1 et du client distant 4, 4'.

Le protocole de transmission du flux de données comprend une étape dans laquelle les paquets sont numérotés par le programme émetteur. Une telle numérotation est particulièrement avantageuse pour assurer une meilleure fiabilité de la transmission du flux de données, puisqu'elle permet d'identifier avec plus de fiabilité un paquet précis et de connaître son ordre chronologique d'émission par rapport aux autres paquets. En d'autres termes, le numéro de paquet permet de savoir à quel endroit du flux de données le paquet en question doit se situer par rapport aux autres paquets reçus. Elle permet au programme récepteur de réordonner les paquets reçus, avant de les exploiter. Le numéro du paquet est alors prévu dans l'en-tête.

Le champ numéro de paquet peut par exemple être codé sur 8 bits dans l'en-tête du paquet, soit 1 octet. Toutefois, l'invention ne se limite aucunement à une telle caractéristique.

### Traitement de fiabilisation du flux de données d'affichage

La figure 2 représente un exemple d'un traitement de fiabilisation s'appliquant sur les données d'affichage du protocole de transmission. Ce traitement est mis en œuvre conjointement par le programme de capture et de diffusion s'exécutant sur l'ordinateur hôte 1 et par le programme d'exploitation s'exécutant sur le client distant 4, 4'.

Le traitement de fiabilisation comprend une étape d'encapsulation des données d'affichage S10. Les données d'affichage peuvent prendre la forme d'un flux vidéo compressé, par exemple au format H.264, préparé par un encodeur à partir des images d'écran de la session informatique s'exécutant dans la machine virtuelle 3 de l'ordinateur hôte 1.

Le traitement de fiabilisation représenté sur la figure 2 prévoit ensuite une étape de numérotation des paquets de données d'affichage S20 avant leur envoi au client distant.

Au cours d'une étape S30, les paquets de données d'affichage sont envoyées par l'ordinateur hôte 1 au niveau du port de sortie indiqué dans l'en-tête propre à la couche de transport du paquet de données d'affichage. Le port de sortie est associé au programme de capture et de diffusion s'exécutant en fond dans la session informatique.

Comme cela a déjà été évoqué, l'acheminement des paquets de données d'affichage du port de sortie de l'ordinateur hôte 1 au port d'entrée associé au programme d'exploitation du client distant 4, 4' s'effectue via le réseau suivant des protocoles de la couche réseau tels que des protocoles IP.

Au cours d'une étape S40, les paquets de données d'affichage sont reçus par le client distant 4, 4' au niveau de son port d'entrée, également indiqué dans l'en-tête propre à la couche de transport du paquet de données d'affichage.

Après la réception par le client distant 4, 4' du flux de données d'affichage, et plus particulièrement par le programme d'exploitation qui s'exécute sur ce client, le flux de données d'affichage reçu est décodé et traité pour s'afficher sur un écran du client distant 4, 4'.

Le traitement de fiabilisation prévoit une étape S50 de détection de perte de données d'affichage par le client distant 4, 4'. Cette étape est mise en œuvre par le programme d'exploitation. Une telle détection est rendue possible par la numérotation des paquets. En effet, cette numérotation permet au client distant 4, 4' de reconnaître un paquet en particulier et de pouvoir identifier, en fonction des numéros des paquets reçus, un numéro manquant.

Selon une première approche, le programme d'exploitation détecte la perte de données d'affichage dès lors qu'un paquet reçu ne possède pas le numéro de paquet correspondant à l'entier directement supérieur au numéro du dernier paquet reçu.

Selon une autre approche, le programme d'exploitation détecte la perte de données d'affichage après qu'un délai prédéterminé d'attente entre la réception d'un paquet portant un numéro et la réception du paquet portant le numéro suivant soit écoulé.

Quel que soit le mode de détection employé, cette étape de détection des pertes de données d'affichage est accompagnée d'une étape de test S50', au cours de laquelle le programme d'exploitation effectue un test binaire selon qu'il a détecté ou non une perte de données. En cas d'absence de détection d'une perte de données d'affichage, le traitement de fiabilisation s'achève (STOP).

Si le client distant 4, 4' détecte une perte de données d'affichage, une étape S60 mise en œuvre par le programme d'exploitation prévoit la transmission par le client distant 4, 4' à l'ordinateur hôte 1 d'un message d'information d'acquittement négatif signalant la perte de données d'affichage. Le message d'information d'acquittement négatif transite, de la même manière que le flux de données d'affichage, entre le port de sortie et le port d'entrée qui lui sont dédiés.

Pour ce faire, le message d'acquittement négatif indique notamment le port de sortie (pouvant être le même que le port d'entrée du paquet de données d'affichage ou non), le port d'entrée (pouvant être le même que le port de sortie du paquet de données d'affichage ou non), sa nature de message d'acquittement négatif, ainsi que le numéro du paquet de données d'affichage correspondant.

En cas de réception d'un message d'information d'acquittement négatif par l'ordinateur hôte 1, une étape S70 prévoit que le programme de capture et de diffusion retrouve le paquet comprenant les données d'affichage perdues. Pour permettre cette fonctionnalité, le traitement de fiabilisation comprend une étape préalable de stockage des paquets de données d'affichage. Par exemple cette étape de stockage peut consister à préserver dans la mémoire de l'ordinateur hôte 1 les 256 derniers paquets de données d'affichage.

A la suite de cette étape, le programme de capture et de diffusion revient à l'étape S30 afin d'envoyer une nouvelle fois le paquet de données d'affichage.

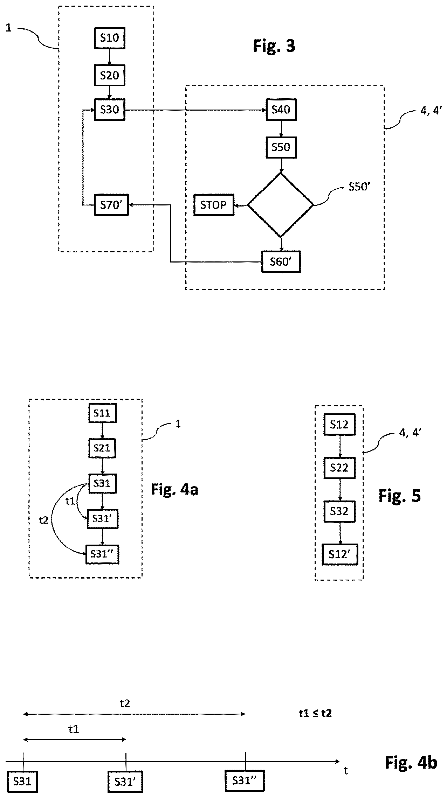

Selon une variante du protocole représenté sur la figure 3, si le test binaire réalisé au cours de l'étape S50' caractérise la détection d'une perte de données d'affichage, le traitement de fiabilisation s'achève (STOP).

Si le client distant 4, 4' ne détecte pas une perte de données d'affichage, c'est-à-dire s'il reçoit correctement le paquet de données d'affichage, une étape S60' prévoit la transmission par le client distant 4, 4' à l'ordinateur hôte 1 d'un message d'information d'acquittement signalant l'absence de perte de données d'affichage, et donc la bonne réception du paquet.

Le message d'information d'acquittement transite, de la même manière que le flux de données d'affichage, entre le port de sortie et le port d'entrée qui lui sont dédiés,

Pour ce faire, le message d'acquittement indique notamment le port de sortie (pouvant être le même que le port d'entrée du paquet de données d'affichage ou non), le port d'entrée (pouvant être le même que le port de sortie du paquet de données d'affichage ou non), sa nature de message d'acquittement, ainsi que le numéro du paquet de données d'affichage correspondant.

Selon cette variante, et en cas d'absence de réception d'un message d'information d'acquittement par l'ordinateur hôte 1 dans un délai prédéterminé, une étape S70' prévoit que le programme de capture et de diffusion de l'ordinateur hôte 1 retrouve le paquet de données perdu, suivant le même mécanisme que celui décrit dans l'étape S70.

A la suite de cette étape, le programme de capture et de diffusion revient à l'étape 30 afin d'envoyer une nouvelle fois le paquet de données d'affichage.

Cette variante présente l'intérêt de permettre à l'ordinateur hôte 1 d'avoir l'assurance qu'un paquet est bien parvenu au client distant 4, 4' dès lors qu'il a fait l'objet de la part de ce dernier d'un accusé de réception. Il rend la transmission des paquets de données d'affichage très fiable, au prix d'un débit de données d'acquittement plus important, ce qui peut avoir un effet sur la qualité de la transmission.

La transmission des messages d'information d'acquittement ou d'acquittement négatif peut se faire suivant le même canal que le canal dit « vidéo » qui permet de transmettre le flux de données d'affichage. Dans ce cas, le canal vidéo est un canal de communication dit « duplex ». Le canal vidéo peut être alternativement un canal dit « full-duplex », c'est-à-dire que les données peuvent être transportées simultanément dans les deux sens, ou « half-duplex », ce qui signifie que le client distant 4, 4' et l'ordinateur hôte 1 ne pourront transmettre simultanément un flux de données.

D'autres informations que les données d'affichages elles-mêmes et que les données d'acquittement peuvent être échangées entre l'ordinateur hôte 1 et le client distant 4, 4'. Ces données additionnelles peuvent viser à déterminer la bande passante du réseau informatique entre l'hôte 1 et le client distant 4, 4', ou une mesure de la latence de transmission. On peut par exemple envisager de placer une information d'horodatage des paquets dans les entêtes, permettant au client, après s'être synchronisé avec l'ordinateur hôte, de déterminer la latence moyenne de réception des données d'affichages pour la communiquer à l'ordinateur hôte. Ces données peuvent permettre d'ajuster, par l'intermédiaire du programme de capture et de diffusion, le niveau de compression employé lors de l'encodage des images d'écran pour former les données d'affichage.

### Traitement de fiabilisation des données de son

Le traitement de fiabilisation du flux de données prévoit un traitement distinct des données de son. Ce traitement de fiabilisation distinct correspond à la redondance externe de la transmission des paquets de données audio.

Par redondance externe, on entend la duplication des paquets de données audio transmis de l'ordinateur hôte 1 au client distant 4, 4'. Cela signifie qu'un même paquet de données audio est systématiquement transmis plusieurs fois de l'ordinateur hôte 1 au client distant 4, 4'. Ainsi, si un tel paquet de données est perdu au cours de la transmission, les paquets doublons permettent aux données de son contenues dans ces paquets de conserver malgré tout une possibilité de parvenir au client distant 4, 4'.

Grâce à la numérotation des paquets de données audio, le client distant 4, 4' dispose en outre de la possibilité de détecter les paquets de données de son déjà reçus et de n'en traiter qu'un seul, ce qui n'augmente pas la puissance de calcul nécessaire au client distant 4, 4'.

Ce traitement de fiabilisation des données de son est avantageux en ce qu'il permet de diminuer les risques de perte d'un paquet de données de son sans toutefois surcharger excessivement la bande passante, la taille d'un paquet de données de son étant souvent faible, voire négligeable, notamment par rapport à la taille d'un paquet de données d'affichage.

Selon un mode de réalisation particulièrement avantageux représenté à la figure 4a, le traitement des données de son comprend une étape S11 d'encapsulation. Les données de son peuvent prendre la forme d'un flux audio compressé préparé par un encodeur. La compression par l'encodeur peut être réalisée dans des formats connus, tels que des formats MP3, Windows Media Audio ou WMA Lossless par exemple. Les données de son sont préparées par le programme de capture et de diffusion s'exécutant en tâche de fond dans la session d'utilisateur. Il peut s'agir de tronçons de son mis à disposition par le système d'exploitation de la machine virtuelle 3, par exemple des tronçons de 10ms.

Le traitement prévoit ensuite une étape S21 de numérotation des paquets de données de son.

Les étapes S11 et S21 d'encapsulation et de numérotation des paquets de données de son peuvent être réitérées pour chaque paquet de données de son, avant chaque transmission du paquet.

Ensuite, au cours d'une étape S31, un premier paquet de données de son, numéroté N, est transmis au cours d'une première transmission.

Cette transmission s'effectue, de la même manière que pour les données d'affichage, au niveau du port de sortie de l'ordinateur hôte, indiqué dans l'en-tête propre à la couche de transport du paquet de données de son. L'acheminement du port de sortie de l'ordinateur hôte 1 vers le port d'entrée du client distant 4, 4' s'effectue via le réseau suivant des protocoles de la couche réseau tels que des protocoles IP.

Au cours d'une étape S31', le paquet N est à nouveau transmis suivant le même procédé que celui évoqué pour la première transmission, cette seconde transmission du paquet N intervenant à l'issue d'un premier délai, noté t1.

Au cours d'une étape S31", un second paquet de données de son, qui correspond au paquet suivant directement le premier paquet N, est transmis à son tour selon le même procédé. Ce second paquet porte ainsi le numéro N+1. Cette transmission du paquet N+1 intervient à l'issue d'un second délai après la première transmission du paquet N, le délai étant noté t2. Ce délai t2 est naturellement choisi plus petit ou égal à la durée du tronçon sonore après que le paquet ait été décodé et reproduit du côté du client. On assure ainsi que l'on puisse reproduire continument du côté du client 4, 4' le son produit par la session informatique du côté de l'ordinateur hôte 1.

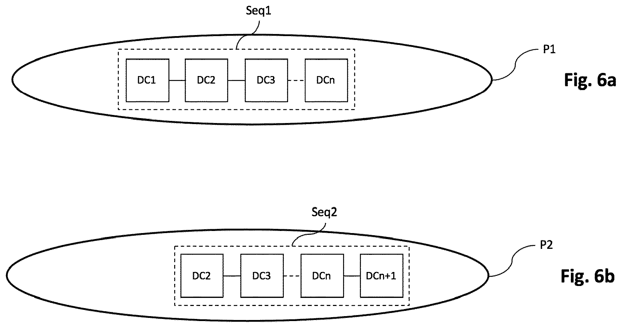

Les délais de transmission entre un paquet N et son doublon, noté t1, et entre un paquet N et le paquet suivant N+1, noté t2, sont tels que le premier délai est préférablement choisi inférieur au second délai, soit t1 ≤ t2, comme cela est représenté sur la figure 6b. En d'autres termes, on évite d'entrelacer les premiers paquets et deuxièmes paquets de son, un tel entrelacement étant susceptible, en cas de perte du premier paquet de données audio, de dégrader la qualité du son reproduit pour l'utilisateur.

Selon un mode particulier de réalisation, le premier délai t1 est compris entre 5 et 20 ms, et le second délai t2 est compris entre 10 et 30 ms.

### Traitement du flux de données de commande

Le traitement de fiabilisation du flux de données prévoit un traitement distinct des données de commande. Ce traitement de fiabilisation distinct correspond à la redondance interne de la transmission des paquets de données de commande.

On désigne par « séquence de données de commandes », un nombre déterminé de données de commandes fournies successivement par les différents dispositifs d'interface du client distant 4, 4'. Il peut ainsi s'agir des dernières données fournis par le clavier et par la souris, correspondant aux touches enfoncées sur le clavier, au déplacement de la souris, etc. Les données de commande générées par les dispositifs d'interface sont capturées par le programme d'exploitation s'exécutant sur le client distant 4, 4', et mises sous forme de séquences, incorporant par exemple les 10 ou 20 dernières données de commande capturées.

Par redondance interne, on entend l'intégration au sein d'un même paquet de données de commande d'une séquence de données de commande. Un nouveau paquet de données de commande est préparé par le programme d'exploitation à la capture de chaque nouvelle donnée de commande, ce paquet comportant donc cette nouvelle donnée de commande ainsi qu'un nombre prédéterminé de données de commande antérieur, et déjà transmis dans un paquet de données de commande antérieur.

Selon le mode particulier de réalisation représenté à la figure 5, le traitement de fiabilité des données de commande comprend ainsi une étape S12 d'encapsulation d'une première séquence de données de commande en un premier paquet P1 de données de commande.

Le traitement peut ensuite prévoir une étape S22 de numérotation du paquet de données de commande au niveau du client distant 4, 4', selon les moyens précédemment évoqués.

Ensuite, le traitement prévoit une étape S32 de transmission du premier paquet P1 de données de commande du client distant 4, 4' à l'ordinateur hôte 1.

Le traitement prévoit également, après réception d'une nouvelle donnée de commande par le programme d'exploitation, d'une étape S12' d'encapsulation d'une nouvelle séquence de données de commande en un second paquet P2 de données de commande. L'encapsulation se fait suivant les mêmes modalités que lors de l'étape S12. Au cours de l'étape S12', la nouvelle séquence de données de commande comporte la nouvelle donnée de commande capturée et une partie de la première séquence de données transmise dans le premier paquet P1. Le second paquet P2 est ensuite à son tour transmis du client distant 4, 4' à l'ordinateur hôte 1 au cours d'une étape S32' de transmission.

La figure 6a illustre de façon schématique un premier paquet P1 de données de commande conforme à l'étape S12. Ce paquet P1 de données comprend une première séquence Seq1 de données de commande. Dans l'exemple particulier de la figure 6a, la première séquence Seq1 comprend n données de commande référencées de DC1 à DCn.

La figure 6b illustre de façon schématique un second paquet P2 de données de commande conforme à l'étape S12'. Dans l'exemple donnée sur la figure 6b, le second paquet P2 comprend une deuxième séquence Seq2 de données de commande. Cette nouvelle séquence de données comporte la nouvelle donnée de commande DCn+1 ainsi qu'une partie de la première séquence de données Seq2 transmise dans le premier paquet P1. Dans cet exemple particulier, la deuxième séquence Seq2 comprend toutes les données de commande de la séquence Seq1 à l'exception de la première donnée de commande DC1.

Cette configuration avantageuse permet de conserver la mémoire des données de commande déjà transmises sans modifier la taille d'un paquet de données de commande.

Du côté de l'ordinateur hôte 1, le programme de capture reçoit les paquets de données de commande, traite les paquets reçus pour en extraire les séquences des données de commande. Il décode ces séquences pour reconstituer la séquence des données commandes capturées du côté du client, en reconstituant la séquence complète même en l'absence de réception d'un ou d'une pluralité de paquets.

Les données de commande doivent pouvoir être transmises à une fréquence bien plus importante que les données de son et d'affichage pour pouvoir être traitées sans délai par l'ordinateur hôte 1 et assurer un niveau de service satisfaisant pour l'utilisateur. La transmission des données de commande peut atteindre une fréquence de 1 000 Hz, contre une fréquence typique de 25 à 100 Hz pour les données de son et d'affichage. Le mécanisme de redondance interne permet donc d'adresser à l'ordinateur hôte 1 chaque nouvelle donnée de commande sans délai excessif, et de rendre redondantes les données de commande du côté de l'ordinateur hôte 1 sans augmenter la fréquence d'envoi des paquets de données, comme cela serait le cas avec un mécanisme de redondance externe. Un envoi de paquet, même de petite taille, à une fréquence élevée peut en effet conduire à congestionner le réseau et réduire la qualité de la transmission.

En traitant de manière spécifique les données d'affichage, de son et de commande, le protocole de transmission de flux qui vient d'être présenté permet donc bien, par la prise en compte des caractéristiques propres à chaque type de données, de fiabiliser la transmission du flux de données entre l'ordinateur hôte 1 et le client distant 4, 4', sans excessivement détériorer la qualité de la transmission, et notamment sa latence.

Bien entendu l'invention n'est pas limitée au mode de mise en œuvre décrit et on peut y apporter des variantes de réalisation sans sortir du cadre de l'invention tel que défini par les revendications.

Ainsi, les données peuvent être transmises par un unique port d'entrée/sortie de l'ordinateur hôte 1 et du client distant 4, 4', permettant une transmission, par le même port, du flux de données comprenant les données d'affichage, les données de son et les données de commande.

Alternativement, les données peuvent être transmises par des ports distincts pour chaque type de données d'affichage, de son et de commande. Dans ce cas, la transmission du flux de données s'effectue suivant trois canaux distincts entre l'ordinateur hôte 1 et le client 4, 4' .

Le protocole peut prévoir que certaines étapes ne soient pas réalisées par le programme de capture et de diffusion s'exécutant en tâche de fond dans la session informatique. En particulier, les étapes S10, S11 d'encapsulation des données, les étapes S20, S21 de numérotation des paquets de données, S30, S31, S31', S31'' d'envoi des paquets de données et/ou l'étape S70 consistant à retrouver les paquets de données d'affichage peuvent être exécutées par un programme extérieur à la machine virtuelle sur laquelle s'exécute la session informatique. De la même façon, l'étape de réception et/ou l'étape de traitement des paquets de données de commande peut être réalisé par un programme extérieur à la machine virtuelle.

Par exemple, le programme de capture et de diffusion peut uniquement consister à commander l'encodage et/ou le décodage des données et fournir/recevoir les données encodées à un programme extérieur à la machine virtuelle, responsable de la mise en œuvre des traitements de fiabilisation et d'émission-réception des paquets de données. Dans cette situation, la charge de calcul imposée à la machine virtuelle sur laquelle s'exécute la session informatique se trouve avantageusement minimisée.

Le protocole peut prévoir la transmission d'autres types de données que les données d'affichage, de son et de commande entre l'ordinateur hôte et le client. Ces données peuvent être transmises à l'aide d'un canal déjà existant ou à l'aide d'un canal dédié. En particulier, pour les données constituées de petites trames, on pourra avantageusement envisager un traitement similaire à celui décrit pour les données de son ou les données de commande.

Le protocole peut prévoir que certaines étapes ne soient pas réalisées par le programme de capture et de diffusion s'exécutant en tâche de fond dans la session informatique. En particulier, les étapes S10, S11 d'encapsulation des données, les étapes S20, S21 de numérotation des paquets de données, S30, S31, S31', S31" d'envoi des paquets de données et/ou l'étape S70 consistant à retrouver les paquets de données d'affichage peuvent être exécutées par un programme extérieur à la machine virtuelle sur laquelle s'exécute la session informatique. De la même façon, l'étape de réception et/ou l'étape de traitement des paquets de données de commande peut être réalisé par un programme extérieur à la machine virtuelle.

Par exemple, le programme de capture et de diffusion peut uniquement consister à commander l'encodage et/ou le décodage des données et fournir/recevoir les données encodées à un programme extérieur à la machine virtuelle, responsable de la mise en œuvre des traitements de fiabilisation et d'émission-réception des paquets de données. Dans cette situation, la charge de calcul imposée à la machine virtuelle sur laquelle s'exécute la session informatique se trouve avantageusement minimisée.

Le protocole peut prévoir la transmission d'autres types de données que les données d'affichage, de son et de commande entre l'ordinateur hôte et le client. Ces données peuvent être transmises à l'aide d'un canal déjà existant ou à l'aide d'un canal dédié. En particulier, pour les données constituées de petites trames, on pourra avantageusement envisager un traitement similaire à celui décrit pour les données de son ou les données de commande.

## Revendications

1. Protocole de transmission d'un flux de données transitant entre un ordinateur hôte (1) et un client distant (4, 4') en utilisant la bande passante d'un réseau informatique, les données comprenant au moins :
- des données d'affichage et de son produites par une session d'utilisateur s'exécutant sur l'ordinateur hôte (1), et
- des données de commande produites par au moins un dispositif d'entrée-sortie du client distant (4, 4'),
les données en transit étant séquencées en paquets numérotés de données d'affichage, de données de son et de donnés de commande, le protocole de transmission comprenant une pluralité de traitements de fiabilisation du flux de données pour parer aux défaillances de transmission, les traitements de fiabilisation s'appliquant respectivement sur les données d'affichage, de son et de commande étant différents les uns des autres, le traitement de fiabilisation des données de son comprenant une étape de redondance externe de la transmission des paquets de données de son, ladite redondance externe comprenant la transmission systématique des paquets de données son plusieurs fois de l'ordinateur hôte au client distant, et le traitement des données de commande comprenant une étape de redondance interne de la transmission des paquets de données de commande , ladite redondance interne comprenant l'intégration au sein d'un même paquet de données de commande d'une séquence de données de commande ladite séquence contenant aussi des données de commande déjà transmises antérieurement.

2. Protocole de transmission d'un flux de données selon la revendication précédente dans lequel le traitement de fiabilisation des données d'affichage comprend les étapes suivantes :
- la détection (S50) par le client distant de perte de données d'affichage ;
- en cas de détection d'une perte de données d'affichage, la transmission (S60) par le client distant à l'ordinateur hôte d'un message d'information d'acquittement négatif signalant la perte de données d'affichage ;
- en cas de réception du message d'information d'acquittement négatif, la transmission par l'ordinateur hôte au client distant des données d'affichage perdues.

3. Protocole de transmission d'un flux de données selon la revendication 1 dans lequel le traitement de fiabilisation des données d'affichage comprend les étapes suivantes :
- la détection (S50) par le client distant de perte de données d'affichage ;
- en cas d'absence de détection d'une perte de données d'affichage, la transmission (S50') par le client distant à l'ordinateur hôte d'un message d'information d'acquittement signalant l'absence de perte de données d'affichage ;
- en cas d'absence de réception du message d'information d'acquittement, la transmission par l'ordinateur hôte au client distant des données d'affichage perdues.

4. Protocole de transmission d'un flux de données selon l'une des revendications précédentes dans lequel l'étape de redondance externe comprend les étapes suivantes :
- une première transmission (S31) d'un premier paquet de données de son ;
- une seconde transmission (S31') du premier paquet de données de son, la seconde transmission intervenant à l'issue d'un premier délai ;
- une première transmission (S31") d'un second paquet de données de son, la première transmission du second paquet de données de son intervenant à l'issue d'un second délai ;
le premier délai étant inférieur au second délai, le second paquet étant numéroté par l'entier directement supérieur au numéro du premier paquet.

5. Protocole de transmission d'un flux de données selon la revendication précédente dans lequel le premier délai est compris entre 5 et 20 ms, et le second délai est compris entre 10 et 30 ms.

6. Protocole de transmission d'un flux de données selon l'une des revendications précédentes dans lequel l'étape de redondance interne comprend les étapes suivantes :
- la préparation (S12, S22) d'une première séquence de données de commande en un premier paquet de données de commande ;
- la transmission (S32) du premier paquet de données de commande ;
- la préparation (S12') d'une seconde séquence de données de commande en un second paquet de données de commande, la seconde séquence de données de commande comportant une partie au moins de la première séquence de données de commande ;
- la transmission (S32') du second paquet de données de commande.

## Patentansprüche

1. Protokoll zum Übertragen eines Datenstroms, der zwischen einem Host-Computer (1) und einem entfernten Client (4, 4') unter Verwendung der Bandbreite eines Rechnernetzes durchläuft, wobei die Daten wenigstens Folgendes umfassen:
- Anzeige- und Tondaten, die durch eine Benutzersitzung erzeugt werden, die auf dem Host-Computer (1) ausgeführt wird, und
- Steuerdaten, die durch wenigstens eine Eingabe-Ausgabe-Vorrichtung des entfernten Clients (4, 4') erzeugt werden,
wobei die durchlaufenden Daten in nummerierte Pakete von Anzeigedaten, Tondaten und Steuerdaten sequenziert werden, wobei das Übertragungsprotokoll mehrere Datenstromzuverlässigkeitsverarbeitungen zum Vorbeugen von Übertragungsfehlern umfasst, wobei die Zuverlässigkeitsverarbeitungen, die jeweils auf die Anzeige-, Ton- und Steuerdaten angewendet werden, voneinander verschieden sind, wobei die Zuverlässigkeitsverarbeitung der Tondaten einen Schritt einer externen Redundanz der Übertragung der Tondatenpakete umfasst, wobei die externe Redundanz die systematische Übertragung der Tondatenpakete mehrmals von dem Host-Computer zu dem entfernten Client umfasst, und die Verarbeitung der Steuerdaten einen Schritt einer internen Redundanz der Übertragung der Steuerdatenpakete umfasst, wobei die interne Redundanz die Integration einer Sequenz von Steuerdaten innerhalb desselben Steuerdatenpakets umfasst, wobei die Sequenz auch Steuerdaten einschließt, die bereits zuvor übertragen wurden.

2. Protokoll zum Übertragen eines Datenstroms nach dem vorhergehenden Anspruch, wobei die Zuverlässigkeitsverarbeitung der Anzeigedaten die folgenden Schritte umfasst:
- Erkennen (S50) eines Verlusts von Anzeigedaten durch den entfernten Client;
- falls ein Verlust von Anzeigedaten erkannt wird, Übertragen (S60) einer Informationsnachricht einer negativen Quittierung, die den Verlust von Anzeigedaten angibt, durch den entfernten Client an den Host-Computer;
- falls eine Informationsnachricht einer negativen Quittierung empfangen wird, Übertragen der verlorenen Anzeigedaten durch den Host-Computer an den entfernten Client.

3. Protokoll zum Übertragen eines Datenstroms nach Anspruch 1, wobei die Zuverlässigkeitsverarbeitung der Anzeigedaten die folgenden Schritte umfasst:
- Erkennen (S50) eines Verlusts von Anzeigedaten durch den entfernten Client;
- falls kein Verlust von Anzeigedaten erkannt wird, Übertragen (S50') einer Informationsnachricht einer Quittierung, die angibt, dass kein Verlust von Anzeigedaten besteht, durch den entfernten Client an den Host-Computer;
- falls keine Informationsnachricht einer Quittierung empfangen wird, Übertragen der verlorenen Anzeigedaten durch den Host-Computer an den entfernten Client.

4. Protokoll zum Übertragen eines Datenstroms nach einem der vorhergehenden Ansprüche, wobei der Schritt der externen Redundanz die folgenden Schritte umfasst:
- ein erstes Übertragen (S31) eines ersten Tondatenpakets;
- ein zweites Übertragen (S31') des ersten Tondatenpakets, wobei das zweite Übertragen nach einer ersten Verzögerung erfolgt;
- ein erstes Übertragen (S31'') eines zweiten Tondatenpakets, wobei das erste Übertragen des zweiten Tondatenpakets nach einer zweiten Verzögerung erfolgt;
wobei die erste Verzögerung kleiner als die zweite Verzögerung ist, wobei das zweite Paket durch die ganze Zahl nummeriert wird, die direkt größer als die Nummer des ersten Pakets ist.

5. Protokoll zum Übertragen eines Datenstroms nach dem vorhergehenden Anspruch, wobei die erste Verzögerung zwischen 5 und 20 ms beträgt und die zweite Verzögerung zwischen 10 und 30 ms beträgt.

6. Protokoll zum Übertragen eines Datenstroms nach einem der vorhergehenden Ansprüche, wobei der Schritt der internen Redundanz die folgenden Schritte umfasst:
- Vorbereiten (S12, S22) einer ersten Sequenz von Steuerdaten in ein erstes Steuerdatenpaket;
- Übertragen (S32) des ersten Steuerdatenpakets;
- Vorbereiten (S12') einer zweiten Sequenz von Steuerdaten in ein zweites Steuerdatenpaket, wobei die zweite Sequenz von Steuerdaten einen Teil von wenigstens der ersten Sequenz von Steuerdaten aufweist;
- Übertragen (S32') des zweiten Steuerdatenpakets.

## Claims

1. Protocol for transmitting a data stream transiting between a host computer (1) and a remote client (4, 4') using the bandwidth of a computer network, the data comprising at least:
- display and sound data produced by a user session running on the host computer (1), and
- control data produced by at least one input-output device of the remote client (4, 4'), the data in transit being sequenced into numbered packets of display data, sound data and control data, the transmission protocol comprising a plurality of data stream reliability treatments in order to counter transmission failures, the reliability treatments applied respectively to the display, sound and control data being different from each other, the sound data reliability treatment comprising a step of external redundancy of the transmission of the sound data packets, said external redundancy comprising the systematic transmission of the sound data packets multiple times from the host computer to the remote client, and the control data treatment comprising a step of internal redundancy of the transmission of the control data packets, said internal redundancy comprising the integration within the same control data packet of a control data sequence, said sequence also containing previously transmitted control data.

2. Protocol for transmitting a data stream according to the preceding claim, wherein the display data reliability treatment comprises the following steps:
- detection (S50) by the remote client of a loss of display data;
- if a loss of display data is detected, the transmission (S60) of a negative acknowledgment information message indicating the loss of display data from the remote client to the host computer;
- if the negative acknowledgment information message is received, the transmission of the lost display data from the host computer to the remote client.

3. Protocol for transmitting a data stream according to claim 1, wherein the display data reliability treatment comprises the following steps:
- detection (S50) by the remote client of a loss of display data;
- if a loss of display data is not detected, the transmission (S50') of an acknowledgment information message indicating the absence of a loss of display data from the remote client to the host computer;
- if the acknowledgment information message is not received, the transmission of the lost display data from the host computer to the remote client.

4. Protocol for transmitting a data stream according to any of the preceding claims, wherein the external redundancy step comprises the following steps:
- a first transmission (S31) of a first sound data packet;
- a second transmission (S31') of the first sound data packet, the second transmission occurring after a first delay;
- a first transmission (S31") of a second sound data packet, the first transmission of the second sound data packet occurring after a second delay;
the first delay being less than the second delay, the second packet being numbered by the integer directly above the number of the first packet.

5. Protocol for transmitting a data stream according to the preceding claim, wherein the first delay is between 5 and 20 ms, and the second delay is between 10 and 30 ms.

6. Protocol for transmitting a data stream according to any of the preceding claims, wherein the internal redundancy step comprises the following steps:
- preparing (S12, S22) a first control data sequence into a first control data packet;
- transmitting (S32) the first control data packet;
- preparing (S12') a second control data sequence into a second control data packet, the second control data sequence comprising at least a portion of the first control data sequence;
- transmitting (S32') the second control data packet.
